(19) Europäisches Patentamt
European Patent Office
Office européen des brevets

(11) **EP 1 947 533 B1**

(12) **EUROPEAN PATENT SPECIFICATION**

(45) Date of publication and mention
of the grant of the patent:
**28.04.2010 Bulletin 2010/17**

(51) Int Cl.:
***G05B 5/01*** *(2006.01)*

(21) Application number: **07100599.5**

(22) Date of filing: **16.01.2007**

(54) **A system and a method for suppressing disturbances in a feedback control system**

System und Verfahren zum Unterdrücken von Störungen in einem Rückkopplungssteuersystem

Système et procédé de suppression de perturbations dans un système de contrôle de retour

(84) Designated Contracting States:
**AT BE BG CH CY CZ DE DK EE ES FI FR GB GR
HU IE IS IT LI LT LU LV MC NL PL PT RO SE SI
SK TR**

(43) Date of publication of application:
**23.07.2008 Bulletin 2008/30**

(73) Proprietor: **SAAB AB**
**581 88 Linköping (SE)**

(72) Inventor: **Hellberg, Daniel**
**175 54 Järfälla (SE)**

(74) Representative: **Herbjörnsen, Rut et al**
**Albihns.Zacco AB**
**Valhallavägen 117**
**Box 5581**
**114 85 Stockholm (SE)**

(56) References cited:
• **BODSON M ET AL: "Rejection of disturbances with a large sinusoidal component of unknown frequency" PROCEEDINGS OF THE SPIE, SPIE, BELLINGHAM, VA, US, vol. 2715, 1996, pages 64-75, XP002402299 ISSN: 0277-786X**
• **HILLIS A J ET AL: "A comparison of two adaptive algorithms for the control of active engine mounts" JOURNAL OF SOUND & VIBRATION, LONDON, GB, vol. 286, no. 1-2, 23 August 2005 (2005-08-23), pages 37-54, XP004939198 ISSN: 0022-460X**
• **JIENG-JANG LIU ET AL: "Frequency adaptive control technique for rejecting periodic runout" CONTROL ENGINEERING PRACTICE, PERGAMON PRESS, OXFORD, GB, vol. 12, no. 1, January 2004 (2004-01), pages 31-40, XP002402300 ISSN: 0967-0661**
• **RASHID ET AL: "Active vibration control in palletised workholding system for milling" INTERNATIONAL JOURNAL OF MACHINE TOOL DESIGN AND RESEARCH, PERGAMON PRESS, OXFORD, GB, vol. 46, no. 12-13, October 2006 (2006-10), pages 1626-1636, XP005585850 ISSN: 0890-6955**

EP 1 947 533 B1

## Description

### Technical field

The present invention relates to a system and a method for suppressing frequency variant, narrow band disturbances in a feedback control system as defined in the preamble of claim 1 and 10, respectively.

### Background of the invention

Interference or noise can be introduced in electronic control systems in many different ways, for example, by having components or sensors susceptible to disturbances in their surroundings, such as variant magnetic fields, mains noise, a shaky and/or noisy environment etc. Various methods have been proposed in the prior art for estimating and alleviating such interferences.

For example, as a military tank is driving towards a destination, there is a need for stabilizing the gun barrel in order to be able to, for example, fire the gun while the vehicle is moving. A lot of things affect the elevation and the direction of the gun barrel while the tank is in motion, such as accelerating or using the brakes of the tank, the surrounding terrain, the road or off-road surface condition etc.

Thus, for alleviating the effects of such factors a feedback control system, for example a servo system, can be used to control and stabilize the gun barrel.

However, aside from the factors mentioned, another factor also affecting the stability of the elevation and direction of the gun barrel is the shaking and thumping of the interconnected links of the driving bands of the tank. The driving bands consist of interconnected metal links rotating around driving wheels, where the interconnected metal links sink into the ground and pushes the tank forward. Depending on primarily the speed of the tank, the interconnected links will cause a frequency variant, narrow band disturbance to be introduced into the servo system. This frequency variant, narrow band disturbance will cause problems in servo systems according to

prior art.

The reason for this is that the frequency variant, narrow band disturbance is located at frequencies that exceed the bandwidth of the feedback control system, that is, the servo system. It is therefore difficult to design the feedback control system so as to work satisfactorily in terms of all system design parameters, i.e. performance, stability, robustness and accuracy etc., over the entire frequency spectrum of interest.

So depending on the characteristics of the interferences and how they are introduced in the electronic control system, there are situations, as described above, where none of the prior art solutions in a satisfying way can eliminate or suppress these disturbances.

In the article "Rejection of disturbances with a large sinusoidal component of unknown frequency" by Bodson M et al, PROCEEDINGS OF THE SPIE, vol. 2715, 1996, pages 64-75, XP002402299, ISSN: 0277-786X, an adaptive algorithm for periodic disturbance attenuation using the concept of a phase-locked loop is described. The adaptive algorithm demonstrates the ability to reject sinusoidal disturbances with unknown frequency, and to follow signals with slowly varying magnitude and frequency.

In the article "A comparison of two adaptive algorithms for the control of active engine mounts" by Hillis A J et al, JOURNAL OF SOUND AND VIBRATION, vol. 286, 2005, no. 1-2, pages 37-54, XP004939198, ISSN: 0022-460X, two algorithms for controlling automotive active engine mounts are compared. One is a filtered-x least-mean-square (FXLMS) adaptive filter algorithm and the other is an error-driven minimal controller synthesis (Er-MCSI) adaptive controller implementation.

In the article "Frequency adaptive control technique for rejecting periodic run-out" by Jieng-Jang Liu et al, CONTROL ENGINEERING PRACTICE, PERGAMON PRESS, vol. 12, 2004, no. 1, pages 31-40, XP002402300, ISSN: 0967-0661, an adaptive controller for rejecting the periodic run-out of a track-following system in the compact disk drive (CDD) with dual actuators. The adaptive controller attempts to attenuate adaptively the specific frequency contents of run-out disturbances without amplifying its rest harmonics.

In the article "Active vibration control in palletised workholding system for milling" by Rashid Amir et al, INTERNATIONAL JOURNAL OF MACHINE TOOL DESIGN AND RESEARCH, PERGAMON PRESS, vol. 46, 2006, no. 12-13, pages 1626-1636, XP005585850, ISSN: 0890-6955, a workholding system for the control of unwanted vibration is targeted. The active control system described is based on an adaptive filtering algorithm, the filtered X-LMS, and employs piezo-actuators for dynamic control force.

**Object of the invention**

It is an object of the present invention to provide a stabile and robust system and method for suppressing frequency variant, narrow band disturbances in a feedback control system with an improved perfonnance and accuracy.

**Summary of the invention**

The object of the present invention is achieved by a system for suppressing frequency variant disturbances in a feedback control system, wherein the system is a inner feedback loop in the feedback control system comprising a real system connected to a first filtering means, which is connected to a frequency estimation means and a system modelling means, wherein said system modelling means is connected to a second filtering means via a subtraction means, characterized in that the frequency estimation means comprises means for estimating the main frequency of a disturbance, the first filtering means removes the frequency content in a first feedback signal around the estimated main frequency, the second filtering means removes the frequency content in a second feedback signal around the estimated main frequency, the system modelling means comprises means arranged to use an second input signal from the first filtering means and the estimated main frequency for modelling and compensating for the damping and the phase loss of the real system, and the subtraction means is arranged to subtract an first output signal from the second filtering means from an second output signal from the system modelling means to get an estimated disturbance signal added to the first input signal of the inner feedback loop.

The object of the present invention is further achieved by a method for suppressing frequency variant disturbances in a system as previously described, characterized in comprising the steps of estimating the main frequency of said disturbance, filtering out the frequency content in a first feedback signal and a second feedback signal around said estimated main frequency, modelling and compensating for the damping and the phase loss of said real system using said estimated main frequency and a second input signal, producing a damping and phase compensated second output signal, producing an estimated disturbance signal by subtracting a first output signal from said second filtering means from said second output signal, and adding said estimated disturbance signal to the first input signal of said inner feedback loop.

An advantage of the above described invention is that it can estimate frequency variant, narrow band disturbances without having to model/design the inverse of a real system. This is advantageous since designing the inverse of the real system so that the model correspond well regarding both added gain and phase shift across all desired frequencies, generally is very difficult. Another advantage is that the present invention can model a non-minimum phase system, whereas in the prior art the inverse of the real system becomes unstable.

Preferably the system may also comprise first and second filtering means that are frequency variant, narrow band pass filters arranged to be adjusted in accordance with the estimated main frequency. This feature enables fast and accurate extraction of the main frequencies of the disturbances.

Preferably the system modelling means of the present invention may further comprise a third filtering means arranged to add a 90° phase shift to a second input signal at the estimated main frequency, a first gain multiplier arranged to remove the added gain of the third filtering means, a first and a second signal generator arranged to generate a third and fourth output signal respectively, a first and a second multiplier arranged to multiply the third output signal of the first signal generator with a fifth output signal of the first gain multiplier and the forth output signal of the second signal generator with the second input signal respectively, a summing node arranged to sum a sixth and seventh output signal of the first and second multiplier and a second gain multiplier arranged to remove the added gain of the real system. An advantage with this feature is that it uses simple trigonometric relationships to achieve an output signal that easily can be used to estimate the frequency variant, narrow band disturbance.

Preferably steps corresponding to this feature are also comprised in the method according to the present invention.

Preferably the third filtering means in the system modelling means of the present invention is a frequency variant, low pass filter arranged to be adjusted in accordance with the estimated main frequency. As previously mentioned, this feature enables fast and accurate extraction of the main frequencies of the frequency variant, narrow band disturbances.

Preferably the system may further comprise a first and a second signal generator arranged to generate the third and forth output signals in dependence of a table and also a second gain multiplier arranged to add a gain in dependence of the table, wherein the table comprises the phase shift and added gain of the real system at dif ferent frequencies. An advantage with this feature is that the table contains stored data that, for example, can be acquired by frequency sweeping, i.e. calculate a Bode diagram, the real system and can be easily retrieved by the first and second signal generator as well as the second gain multiplier.

In the method according to the present invention this feature may be enabled by further comprising the step of generating the third and fourth output signals from a first and a second signal generator, respectively, and the step of removing the added gain of said real system by using a second gain multiplier is performed in dependence of a table comprising the phase shift and added gain of the real system at different frequencies.

The frequency estimation means of the present invention may further comprises calculation means arranged to use a predetermined, continuous function of a measurable system variable of the real system. This feature enables estimation of the main frequencies of the frequency variant, narrow band disturbances by inputting a measurable system variable to the predetermined, continuous function.

In the method according to the present invention this feature may be enabled by having the step of estimating the main frequency of said disturbance further comprise the step of using a predetermined, continuous function of a measurable system variable of said real system.

Preferably the frequency estimation means of the present invention may further comprise calculation means arranged to use the discrete Fourier transform to calculate the frequency spectrum of the feedback signal on a predetermined interval and extraction means arranged to extract the frequency which has the maximum energy peak value in the frequency spectrum and set the extracted frequency as the estimated main frequency of the disturbance. This feature enables a more accurate and precise estimation of the main frequencies of the frequency variant, narrow band disturbances.

In the method according to the present invention this feature may be enabled by having the step of estimating the main frequency of said disturbance further comprising the steps of using the discrete Fourier transform to calculate the frequency spectrum of said feedback signal on a predetermined interval, extracting the frequency which has the maximum energy peak value in said frequency spectrum and setting said extracted frequency as the estimated main frequency of said disturbance.

Preferably the predetermined interval may be determined by using the predetermined, continuous function of the measurable system variable of the real system.

In the method according to the present invention this feature may be enabled by having the step of estimating the main frequency of said disturbance further comprise the step of using said predetermined, continuous function of said measurable system variable of said real system to determine said predetermined interval.

Further, the measurable system variable of said real system can be the speed of the driving bands of a military tank.

## Brief description of the drawings

The present invention will be described in more detail in the following, with reference to the appended drawings, in which:

Fig. 1 illustrates an example of how an out-of-band interference can be introduced into a servo system;

Fig. 2 shows a system according to the prior art;

Fig. 3 shows a first embodiment of a system according to the present invention;

Fig. 4 shows a second embodiment of system according to the present invention.

## Description of the preferred embodiments

The description of the present invention will refer to embodiments as implemented for controlling the elevation and direction of the gun barrel of a military tank. This should, however, not be considered as limiting the present invention to these embodiments, but instead be viewed as illustrative examples.

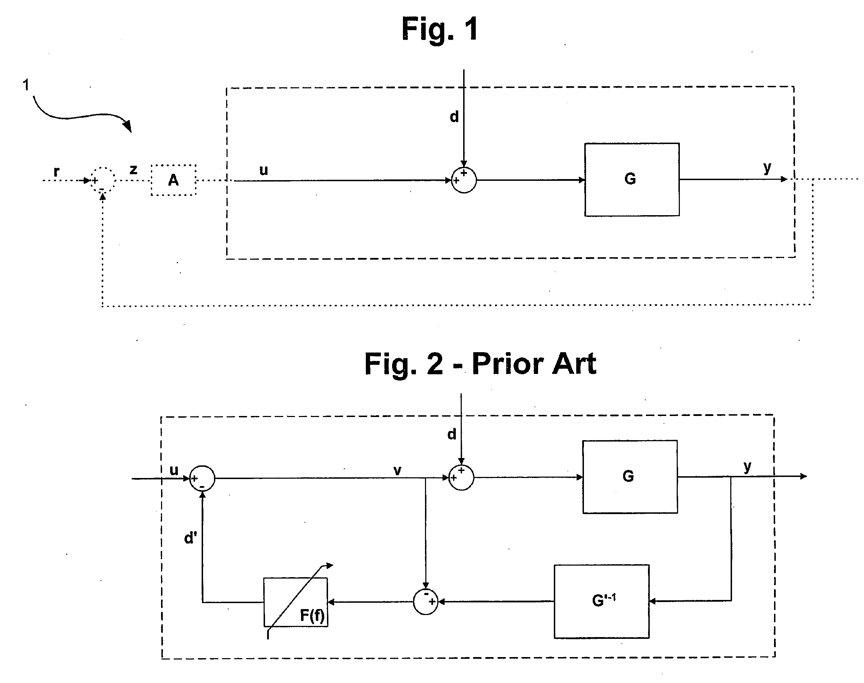

Fig. 1 schematically illustrates an example of a feedback control system 1, represented by the dotted lines, for controlling the output signal y of a real system G. In the feedback control system 1, the output signal **y** from the real system **G** is fed back to and subtracted from a reference signal **r.** The resulting signal **z** is used as an input into a controller **A** outputting the input signal **u** to the real system **G**. Also illustrated in Fig. 1, is how a disturbance **d** is introduced and added to the input signal **u** before being inputted into the real system **G** which in turn outputs the signal **y**. Because of reasons mentioned in the background above, a disturbance can often be present in the input signal to the real system G, for example, as depicted in the feedback control system 1 in Fig. 1, and if the frequency or frequencies of the disturbance is below the bandwidth of the feedback control system **1,** the feedback control system can be designed to eliminate or alleviate the effects of this disturbance on the output signal **y.** However, if the frequency range in which the disturbance is located is above the bandwidth of the feedback control system **1,** the disturbance will remain and ultimately affect the output signal **y,** since it can not be attended to by the feedback control system **1.** The disturbance **d** is such an out-of-band disturbance, that is, the frequency range of the disturbance is located outside of the bandwidth of the feedback control system **1,** and is therefore depicted in the feedback control system 1 as introduced before the real system **G,** and thereby also introduced in the feedback control system **1.**

An example of the feedback control system **1** illustrated in Fig.1 is the servo system for controlling the elevation and direction of the gun barrel on a military tank. The out-of-band disturbance signal **d** is in this case the previously mentioned frequency variant, narrow band disturbance caused by the interconnected links of the driving bands.

The feedback control system **1** could of course be any form of closed loop control system and is simply depicted for the benefit of providing a skilled person with a better understanding of the present invention. As an example, the reference signal **r** could be an output signal from a control unit, joystick etc., operated by a tank operator e.g. for aiming the gun barrel at a target, and the controller **A** could be could be a PID-controller designed and adapted for controlling the feedback control system **1.**

Fig. 2 schematically illustrates an inner feedback loop for eliminating an out-of band disturbance according to prior art.

An out-of-band disturbance signal **d** is introduced and added to a signal **v,** which comprises an input signal **u** and an estimate **d'** of the disturbance signal **d.**

To obtain the estimated signal **d',** the output signal y is fed back into an estimated model **G'⁻¹** of the inverse of the real system **G.** From the output of the estimated model **G'⁻¹,** the signal **v** is subtracted and the resulting signal sent to a frequency variant filter **F(f).** From the filter **F(f),** an estimated signal **d'** of the disturbance **d** is outputted.

In order to arrive at the model **G'⁻¹,** a frequency analysis, e.g. a Bode-diagram, of the real system **G** is performed. By adapting a linear system to the measured data from the frequency analysis and inverting the linear system, an estimated model of the inverse system **G'⁻¹** is created.

The estimated model **G'⁻¹** is also arranged to be causal according to the following equation 1 in the Laplace domain:

$$G^{-1}(s) = \frac{P(s)}{Q(s)} \text{ , where } ord[P(s)] < ord[Q(s)]. \qquad (1)$$

The transfer function of the inner feedback loop in Fig. 2, from the input signal **u** and the disturbance signal **d** to the output signal **y,** is shown in equation 2:

$$y = G \cdot u + (1 - F(f)) \cdot G \cdot d \qquad (2)$$

However, a problem in the prior art is that it is very difficult to find a linear system which can, after being adapted to the measured data of the real system **G** and inverted and made causal, accurately correspond to the behaviour of the real system **G** across the whole desired frequency range.

Another problem in the prior art is when the real system **G** is a system with a non-minimum phase behaviour. This implies that the linear system adapted to the measured data of the real system **G** has a transfer function in the Laplace domain which has zeros in the right half plane of the s-plane. Consequently, the inverse of the linear system adapted to the measured data of the real system **G'⁻¹** has a transfer function in the Laplace domain which has poles in the right half plane, which means that is **G'⁻¹** is unstable.

These problems render the prior art solutions difficult to design in view of all system design parameters, i.e. performance, stability, robustness and accuracy etc., over the entire frequency spectrum of interest and are therefore not able to eliminate out-of-band disturbances in a satisfying way.

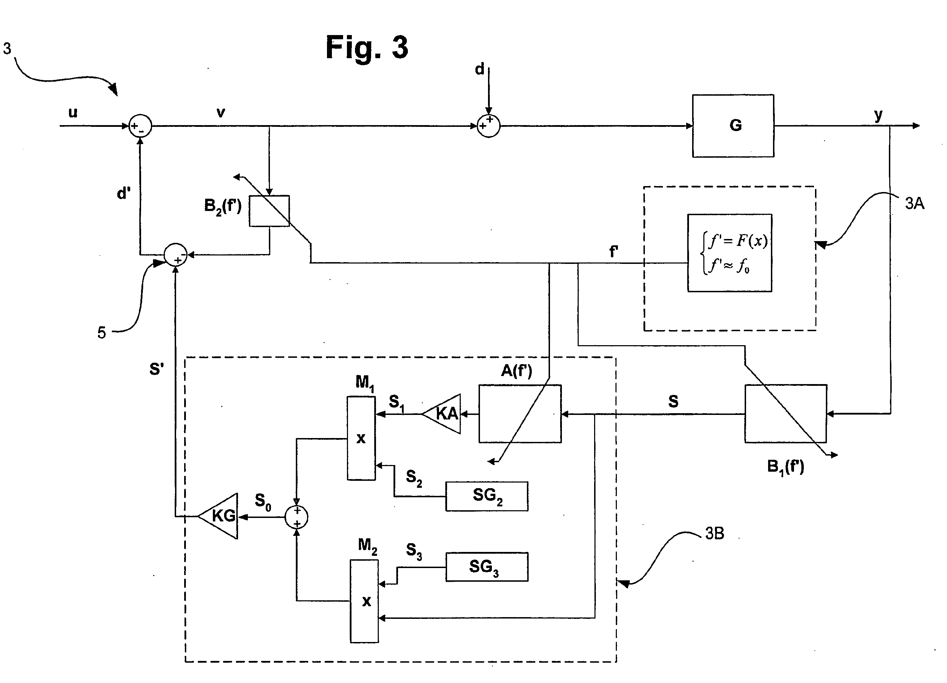

Fig. 3 illustrates a first embodiment of the present invention comprising an inner feedback loop for eliminating an out-of-band disturbance.

As in Fig. 1, an out-of-band disturbance signal **d** is added to a signal **v,** which comprises an input signal **u** and an estimate **d'** of the disturbance signal **d.** To get the estimated signal **d',** the output signal **y** is first fed back into to an adjustable, narrow band pass filter **B₁** which is arranged to output a signal **S.**

For the adjustable, narrow band pass filter **B₁,** the main frequency $f_0$ of the disturbance signal **d** can be approximately estimated by the frequency estimation means **3A** according to the following equation 3:

$$f' = F(x) \Rightarrow f' \approx f_0 \qquad (3)$$

The known, continuous function F(x) of the measurable system variable x, for example the speed of the driving bands, can be achieved empirically by testing and experimenting on the real system **G.** Therefore, the narrow band pass filter **B$_1$,** can be designed as time-variant band pass filter **B$_1$(f'),** wherein the band pass frequency is set to be the estimated main frequency f', which means that the variation of the time-variant band pass filter **B$_1$(f')** is adapted to the variation of the main frequency f$_0$ of the frequency variant, narrow band disturbance.

Then, in the inner feedback loop, the signal S can be written according to either one of the following equations 4-5:

$$S = G \cdot B_1 \cdot (v + d) \qquad (4)$$

$$S = \frac{1}{KG} \sin(2\pi f' \cdot t - \varphi_G) \qquad (5)$$

wherein the equation 5 the real system **G** has shifted the phase of the input signal v + **d** at the frequency f' with the angle

$\varphi_G$ and multiplied it with a gain $\dfrac{1}{KG} \cdot$ This, of course, since the adjustable, band pass filter **B$_1$** is a narrow band pass filter with zero phase shift and gain 1 (0 dB) at the frequency f , which removes most of the frequencies outside the main frequency f$_0$ of the frequency variant, narrow band disturbance **d.**

The signal **S** is used as input into a low-pass filter **A(f)** and also into a multiplier **M$_2$.** The low-pass filter **A(f')** is designed to add a phase shift of 90° to its input signal **S** by also utilizing the same known, continuous function F(x) as the adjustable, narrow band pass filter **B$_1$(f').** Unfortunately, it also adds a gain of $\dfrac{1}{\sqrt{2}}$ to the signal **S.** The resulting signal is therefore multiplied by a gain -√2 by using a gain multiplier **KA.** This means that the output signal **S$_1$** from the gain multiplier **KA** in comparison to the signal S has changed sign and has been shifted 90° before being inputted into the multiplier **M$_1$.**

It should be understood that the main purpose of the low-pass filter **A(f')** is to add a phase shift of 90° to the input signal **S** and for which there are several different filter designs applicable. In this case, the consequential added gain of the low-pass filter **A(f')** is just a bi-product of the filter and could be removed in any suitable way. The signal **S$_1$** can therefore be written according to the following equation 6:

$$S_1 = \frac{1}{KG} \cos(2\pi f' \cdot t - \varphi_G) \qquad (6)$$

The signals **S$_1$** and **S,** wherein **S** is the output signal from the adjustable, narrow band pass filter **B$_1$(f'),** are then multiplied with the signals **S$_2$** and S$_3$ respectively in the multipliers **M$_1$** and **M$_2$.** The signals **S$_2$** and S$_3$ are created in signal generators **SG$_2$** and **SG$_3$,** respectively, and according to the following equations 7 and 8:

$$S_2 = \cos(-\varphi_G + \frac{\pi}{2}) \qquad (7)$$

$$S_3 = \sin(-\varphi_G + \frac{\pi}{2}) \qquad (8)$$

where the angle $\varphi_G$ is the phase shift of the real system **G** at the frequency f' which is obtained from a table of system parameters **T** that has been achieved by a frequency analysis of the real system **G.**

The outputs from the multipliers **M$_1$** and **M$_2$** are then added to form the signal **S$_0$.** Because of the trigonometric relationships between the output signals from the multipliers $\mathbf{M_1}$ and $\mathbf{M_2}$, the signal $\mathbf{S_0}$ becomes identical to the output from the filter $\mathbf{B_1(f')}$ although including a phase shift of the angle $\varphi_G$. The trigonometric relationships in the signal $\mathbf{S_0}$ can be written according to the following equations 9-11:

$$S_1 \cdot S_2 = \cos(\omega \cdot t - \varphi_G) \cdot \cos(-\varphi_G + \frac{\pi}{2}) = \frac{1}{2}\left[\cos(\omega \cdot t - \frac{\pi}{2}) + \cos(\omega \cdot t - 2 \cdot \varphi_G + \frac{\pi}{2})\right] \quad (9)$$

$$S \cdot S_3 = \sin(\omega \cdot t - \varphi_G) \cdot \sin(-\varphi_G + \frac{\pi}{2}) = \frac{1}{2}\left[\cos(\omega \cdot t - \frac{\pi}{2}) - \cos(\omega \cdot t - 2 \cdot \varphi_G + \frac{\pi}{2})\right] \quad (10)$$

$$\Rightarrow S_0 = S_1 \cdot S_2 + S \cdot S_3 = \cos(\omega \cdot t - \frac{\pi}{2}) = \sin(\omega \cdot t) \quad (11)$$

Therefore the summed output signal $\mathbf{S_0}$ can be written according to the following equation 12:

$$S_0 = \frac{1}{KG}\sin(2\pi f' \cdot t) \quad (12)$$

Then the summed output signal $\mathbf{S_0}$ is, by using a gain multiplier $\mathbf{KG}$, multiplied with a gain $\mathbf{KG}$, also obtained from the previously mentioned table of system parameters $\mathbf{T}$. This results in that the attenuation, or damping, and phase loss which the real system $\mathbf{G}$ has enforced on the control signal $\mathbf{v}$ and the disturbance signal $\mathbf{d}$ at the frequency $\mathbf{f'}$ resulting in the output signal $\mathbf{y}$ have been compensated for without having to invert an adapted linear system model of the real system $\mathbf{G}$.

The signal $\mathbf{v}$, for which most of the frequencies outside the main frequency $f_0$ of the frequency variant, narrow band disturbance $\mathbf{d}$ has been filtered out by being passed through an adjustable, narrow band pass filter $\mathbf{B_2(f')}$, identical to the adjustable, narrow band pass filter $\mathbf{B_1(f')}$, is then subtracted from the signal S' leaving the resulting signal $\mathbf{d'}$ comprising an estimate of the disturbance signal $\mathbf{d}$. As can be seen from Fig. 3, this results in that the estimated disturbance signal $\mathbf{d'}$ is subtracted from the input signal $\mathbf{u}$ and, since $\mathbf{d'}$ approximates $\mathbf{d}$, thus eliminates or at least suppresses the effects of added the disturbance signal $\mathbf{d}$ on the output signal $\mathbf{y}$ from the real system $\mathbf{G}$.

This means that the present invention can eliminate or suppress the effects of a disturbance signal introduced to the real system $\mathbf{G}$, even when the real system $\mathbf{G}$ is a non-minimum phase system, without resulting in an unstable control loop. It also means that the present invention can eliminate or at least suppress out-of-band, frequency variant noise in a feedback control system, for example, the feedback control system $\mathbf{1}$ in Fig. 1.

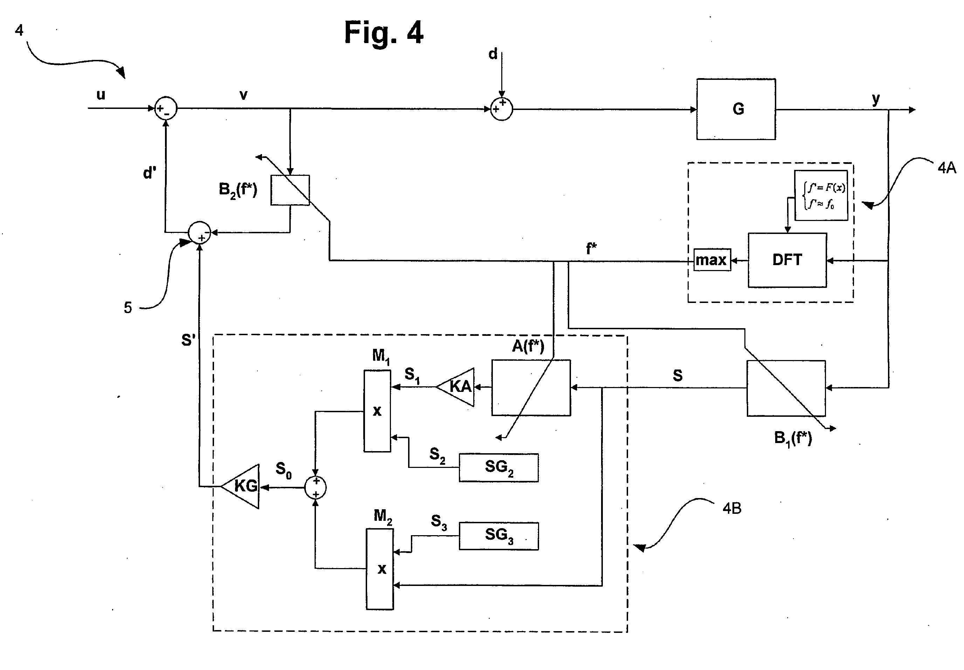

Fig. 4 illustrates a second embodiment according to the present invention. The inner feedback loop depicted in Fig.4 is identical to the inner feedback loop in Fig. 3, except that this second embodiment also comprises frequency estimation means $\mathbf{4A}$ instead of $\mathbf{3A}$, which includes calculation means $\mathbf{DFT}$ and extraction means $\mathbf{max}$, for improving the estimation of the main frequency of the out-of-band, frequency variant disturbance $\mathbf{d}$.

So, in addition to the output signal y being fed back into to the adjustable, narrow band pass filter $\mathbf{B_1(f^*)}$, the output signal $\mathbf{y}$ is also fed back into the calculation means $\mathbf{DFT}$. The calculation means $\mathbf{DFT}$ uses the discrete Fourier transform to calculate the frequency spectrum of the output signal $\mathbf{y}$ on a predetermined interval I, defined according to the equation 13:

$$I = \left[f_0 - a, f_0 + a\right] \quad (13)$$

where $f_0$ is estimated by the predetermined known continuous function F(x), according to equation 3 described in reference to Fig. 2, and a is a suitable parameter depending on, and is preferably calibrated for, each specific implementation of the present invention.

The extraction means $\mathbf{max}$ then searches across the frequencies of the frequency spectrum of the interval I for a peak energy value. Once a maximum energy value for the frequency spectrum has been found, the frequency f* where this maximum energy value occurs is extracted and set as the main frequency of $f_0$ of the disturbance signal **d.** The frequency value f* is then used for adjusting the band pass frequencies of the filters **$B_1(f^*)$** and **$B_2(f^*)$,** and also for adjusting the filter **$A(f^*)$.** Also, it should be noted the calculation means **DFT** and the extraction means **max** can easily be implemented integrally and are separated herein only for the sake of clarity.

The calculation means **DFT** enables the inner feedback loop to automatically and more accurately estimate the main frequency $f_0$ of the disturbance signal **d.**

## Claims

1. A system for suppressing frequency variant disturbances for a feedback control system (3; 4), wherein said system is a inner feedback loop in the feedback control system (3; 4) comprising a real system (G) connected to a first filtering means ($B_1(f')$; $B_1(f^*)$), which is connected to a frequency estimation means (3A; 4A) and a system modelling means (3B; 4B), wherein said system modelling means (3B; 4B) is connected to a second filtering means ($B_2(f')$; $B_2(f^*)$) via a subtraction means (5),
   **characterized in that**
   said frequency estimation means (3A; 4A) comprises means for estimating the main frequency (f; f*) of a disturbance (d);
   said first filtering means ($B_1(f')$; $B_1(f^*)$) is arranged to remove the frequency content in a first feedback signal (y) around said estimated main frequency (f; f*); said second filtering means ($B_2(f')$; $B_2(f^*)$) is arranged to remove the frequency content in a second feedback signal (v) around said estimated main frequency (f; f*);
   said system modelling means (3B; 4B) comprises means arranged to use an second input signal (S) from said first filtering means ($B_1(f')$; $B_1(f^*)$) and said estimated main frequency (f; f*) for modelling and compensating for the damping and the phase loss of said real system (G); and
   said subtraction means (5) is arranged to subtract an first output signal from said second filtering means ($B_2(f')$; $B_2(f^*)$) from an second output signal (S') from said system modelling means (3B; 4B) to get an estimated disturbance signal (d') added to an first input signal (u) of said inner feedback loop.

2. A system according to claim 1, wherein said first and second filtering means ($B_1(f')$; $B_1(f^*)$; $B_2(f')$; $B_2(f^*)$) are frequency variant, narrow band pass filters arranged to be adjusted in accordance with said estimated main frequency (f; f*).

3. A system according to any of the claims 1 to 2, wherein said system modelling means (3B; 4B) comprises
   a third filtering means ($A(f')$; $A(f^*)$) arranged to add a 90° phase shift to a second input signal (S) at said estimated main frequency (f';f*);
   a first gain multiplier (KA) arranged to remove the added gain of said third filtering means ($A(f')$; $A(f^*)$);
   a first and a second signal generator ($SG_2$, $SG_3$) arranged to generate a third and fourth output signal ($S_2$, $S_3$) respectively;
   a first and a second multiplier ($M_1$, $M_2$) arranged to multiply said third output signal ($S_2$) of said first signal generator ($SG_2$) with a fifth output signal ($S_1$) of said first gain multiplier (KA) and said fourth output signal ($S_3$) of said second signal generator ($SG_3$) with said second input signal (S) respectively;
   a summing node arranged to sum a sixth and seventh output signal of said first and second multiplier ($M_1$, $M_2$) and a second gain multiplier (KG) arranged to remove the added gain of said real system (G).

4. A system according to claim 3, wherein said third filtering means ($A(f')$; $A(f^*)$) is a frequency variant, low pass filter arranged to be adjusted in accordance with said estimated main frequency (f';f*).

5. A system according to claim 3 or 4, wherein said first and second signal generator ($SG_2$, $SG_3$) are arranged to generate said third and fourth output signals ($S_2$, $S_3$) in dependence of a table (T) and also said second gain multiplier (KG) is arranged to add a gain in dependence of said table (T), wherein said table (T) comprises the phase shift and added gain of the real system (G) at different frequencies.

6. A system according to any of the claims 1 to 5, wherein said frequency estimation means (3A; 4A) comprises calculation means arranged to use a predetermined, continuous function (F(x)) of a measurable system variable (x) of said real system (G).

7. A system according to any of the claims 1 to 5, wherein said frequency estimation means (3A; 4A) comprises calculation means (DFT) arranged to use the discrete Fourier transform to calculate the frequency spectrum of said feedback signal (y) on a predetermined interval (I) and
extraction means (max) arranged to extract the frequency which has the maximum energy peak value in said frequency spectrum and set said extracted frequency as the estimated main frequency (f'; f*) of said disturbance (d).

**8.** A system according to claim 7, wherein said predetermined interval (I) is determined by using said predetermined, continuous function (F(x)) of said measurable system variable (x) of said real system (G).

**9.** A system according to any of the claims 6 or 8, wherein said measurable system variable (x) of said real system (G) is the speed of the driving bands of a military tank.

**10.** A method for suppressing frequency variant disturbances (d) in a system for suppressing frequency variant disturbances for a feedback control system (3; 4), wherein said system is a inner feedback loop in the feedback control system (3; 4) comprising a real system (G) connected to a first filtering means ($B_1$(f'); $B_1$(f*)), which is connected to a frequency estimation means (3A; 4A) and a system modelling means (3B; 4B), wherein said system modelling means (3B; 4B) is connected to a second filtering means ($B_2$(f'); $B_2$(f*)) via a subtraction means (5),
**characterized in**
comprising the steps of:

- estimating the main frequency (f; f*) of a disturbance (d);
- filtering out the frequency content in a first feedback signal (y) and a second feedback signal (v) around said estimated main frequency (f'; f*);
- modelling and compensating for the damping and the phase loss of said real system (G) using said estimated main frequency (f; f*) and a second input signal (S);
- producing a damping and phase compensated second output signal (S');
- producing an estimated disturbance signal (d') by subtracting a first output signal from said second filtering means ($B_2$(f'); $B_2$(f*)) from said second output signal (S'); and
- adding said estimated disturbance signal (d') to a first input signal (u) of said inner feedback loop.

**11.** A method according to claim 10, wherein the step of modelling and compensating for the damping and the phase loss of said real system (G) using said estimated main frequency (f; f*) and the filtered first feedback signal (y) further comprises the steps of:

- adding a 90° phase shift to an second input signal (S) at said estimated main frequency (f';f*) by using a third filtering means (A(f'); A(f*));
- removing the added gain of said third filtering means (A(f'); A(f*)) by using a first gain multiplier (KA);
- generating third and fourth output signal ($S_2$, $S_3$) from a first and a second signal generator ($SG_2$, $SG_3$), respectively;
- multiplying said third output signal ($S_2$) of said first signal generator ($SG_2$) with a fifth output signal ($S_1$) of said first gain multiplier (KA) and said fourth output signal ($S_3$) of said second signal generator ($SG_3$) with said second input signal (S) by using a first and a second multiplier ($M_1$, $M_2$), respectively;
- summing a sixth and seventh output signal of said first and second multiplier ($M_1$, $M_2$), respectively, by using a summing node;
- removing the added gain of said real system (G) by using a second gain multiplier (KG).

**12.** A method according to claim 11, wherein the step of generating said third and fourth output signal ($S_2$, $S_3$) from a first and a second signal generator ($SG_2$, $SG_3$), respectively, and the step of removing the added gain of said real system (G) by using a second gain multiplier (KG) is performed in dependence of a table (T) comprising the phase shift and added gain of the real system (G) at different frequencies.

**13.** A method according to any of the claims 10 to 12, wherein the step of estimating the main frequency (f; f*) of said disturbance (d) further comprises the step of:

- using a predetermined, continuous function (F(x)) of a measurable system variable (x) of said real system (G).

**14.** A method according to any of the claims 10 to 13, wherein the step of estimating the main frequency (f; f*) of said disturbance (d) further comprises the steps of:

- using the discrete Fourier transform to calculate the frequency spectrum of said feedback signal (y) on a predetermined interval (I);
- extracting the frequency which has the maximum energy peak value in said frequency spectrum; and
- setting said extracted frequency as the estimated main frequency (f; f*) of said disturbance (d).

**15.** A method according to claim 14, wherein the step of estimating the main frequency (f; f*) of said disturbance (d) further comprises the step of:

- using said predetermined, continuous function (F(x)) of said measurable system variable (x) of said real system (G) to determine said predetermined interval (I).

**16.** A feedback control system (3; 4) comprising a system for suppressing frequency variant disturbances according to any one of the claims 1-9.

**17.** A feedback control system (3; 4) according to claim 16, wherein said feedback control system (3; 4) is a servo system for controlling the elevation and direction of a gun barrel on a military tank.

**Patentansprüche**

**1.** System zum Unterdrücken von frequenzvarianten Störungen für ein Rückkopplungssteuersystem (3; 4), wobei das System eine innere Rückkopplungsschleife in dem Rückkopplungssteuersystem (3; 4) ist, das ein Realsystem (G), verbunden mit einem ersten Filtermittel ($B_1$f');$B_1$(f*)), das mit einem Frequenzschätzmittel (3A; 4A), und einem Systemmodelliermittel (3B; 4B) verbunden ist, umfasst, wobei das Systemmodelliermittel (3B; 4B) mit einem zweiten Filtermittel ($B_2$(f');$B_2$(f*)) über ein Subtraktionsmittel (5) verbunden ist,
**dadurch gekennzeichnet, dass**
das Frequenzschätzmittel (3A; 4A) Mittel zum Schätzen der Hauptfrequenz (f'; f*) einer Störung (d) umfasst;
das erste Filtermittel ($B_1$(f') ; $B_1$(f*)) dafür ausgelegt ist, den Frequenzgehalt in einem ersten Rückkopplungssignal (y) um die geschätzte Hauptfrequenz (f'; f*) herum zu entfernen; das zweite Filtermittel ($B_2$(f');$B_2$(f*)) dafür ausgelegt ist, den Frequenzgehalt in einem zweiten Rückkopplungssignal (v) um die geschätzte Hauptfrequenz (f'; f*) herum zu entfernen;
das Systemmodelliermittel (3B; 4B) Mittel umfasst, die dafür ausgelegt sind, ein zweites Eingangssignal (S) aus dem ersten Filtermittel ($B_1$(f');$B_1$(f*)) und die geschätzte Hauptfrequenz (f'; f*) zum Modellieren und Kompensieren für die Dämpfung und für den Phasenverlust des realen Systems (G) zu verwenden; und
das Subtraktionsmittel (5) dafür ausgelegt ist, ein erstes Ausgangssignal aus dem zweiten Filtermittel ($B_2$(f') ; $B_2$(f*)) von einem zweiten Ausgangssignal (S') aus dem Systemmodelliermittel (3B; 4B) zu subtrahieren, um ein, zu einem ersten Eingangssignal (u) der inneren Rückkopplungsschleife addiertes Schätzstörungssignal (d') zu erhalten.

**2.** System gemäß Anspruch 1, wobei die ersten und zweiten Filtermittel ($B_1$(f'); $B_1$(f*)); ($B_2$(f'); $B_2$(f*)) frequenzvariante Schmallbandpassfilter sind, die dafür ausgelegt sind, anhand der geschätzten Hauptfrequenz (f'; f*) adjustiert zu werden.

**3.** System gemäß einem der Ansprüche 1 bis 2, wobei das Systemmodelliermittel (3B; 4B) umfasst:

ein drittes Filtermittel (A(f'); A(f*)), das dafür ausgelegt ist, eine 90°-Phasenverschiebung zu einem zweiten Eingangssignal (S) bei der geschätzten Hauptfrequenz (f'; f*) zu addieren;
einen ersten Verstärkungsmultiplikator (KA), der dafür ausgelegt ist, die addierte Verstärkung des dritten Filtermittels (A(f'); A(f*)) zu entfernen;
einen ersten und ein zweiten Signalgenerator ($SG_2$, $SG_3$), die dafür ausgelegt sind, ein drittes bzw. viertes Ausgangssignal ($S_2$, $S_3$) zu erzeugen;
einen ersten und ein zweiten Multiplikator ($M_1$, $M_2$), die dafür ausgelegt sind, jeweils das dritte Ausgangssignal ($S_2$) des ersten Signalgenerators ($SG_2$) mit einem fünften Ausgangssignal ($S_1$) des ersten Verstärkungsmultiplikators (KA) und das vierte Ausgangssignal ($S_3$) des zweite Signalgenerators mit dem zweiten Eingangssignal (S) zu multiplizieren;
einen Summierknoten, der dafür ausgelegt ist, ein sechstes und siebtes Ausgangssignal des ersten und zweiten Multiplikators ($M_1$, $M_2$) zu summieren, und einen zweiten Verstärkungsmultiplikator (KG), der dafür ausgelegt ist, die addierte Verstärkung des realen Systems (G) zu summieren.

**4.** System gemäß Anspruch 3, wobei das dritte Filtermittel (A(f'); A(f*)) ein frequenzvariantes Niederpassfilter ist, das dafür ausgelegt ist, gemäß der geschätzten Hauptfrequenz (f'; f*) adjustiert zu werden.

5. System gemäß Anspruch 3 oder 4, wobei der erste und zweite Signalgenerator ($S_2$, $S_3$) dafür ausgelegt sind, die dritten und vierten Ausgangssignale ($S_2$, $S_3$) in Abhängigkeit einer Tabelle (T) zu erzeugen und auch der zweite Verstärkungsmittelmultiplikator (KG) dafür ausgelegt ist, eine Verstärkung abhängig von der Tabelle (T) zu addieren, wobei die Tabelle (T) die Phasenverschiebung und die addierte Verstärkung des realen Systems (G) bei verschiedenen Frequenzen umfasst.

6. System gemäß einem der Ansprüche 1 bis 5, wobei das Frequenzschätzmittel (3A; 4A) Berechnungsmittel umfasst, die dafür ausgelegt sind, eine vorbestimmte kontinuierliche Funktion (F(x)) einer messbaren Systemvariable (x) des realen Systems (G) zu verwenden.

7. System gemäß einem der Ansprüche 1 bis 5, wobei das Frequenzschätzmittel (3A; 4A) umfasst:

   Berechnungsmittel (DFT), die dafür ausgelegt sind, die diskrete Fourier-Transformation zu verwenden, um das Frequenzspektrum des Rückkopplungssignals (y) auf einem vorbestimmten Intervall (I) zu berechnen, und Extraktionsmittel (max), die dafür ausgelegt sind, die Frequenz zu extrahieren, die den maximalen Energiespitzenwert im Frequenzspektrum aufweist, und die extrahierte Frequenz als die geschätzte Hauptfrequenz (f'; f*) der Störung (d) einzustellen.

8. System gemäß Anspruch 7, wobei das vorbestimmte Intervall (I) unter Verwendung der vorbestimmten kontinuierlichen Funktion (F(x)) der messbaren Systemvariablen (x) des realen Systems (G) bestimmt wird.

9. System gemäß einem der Ansprüche 6 bis 8, wobei die messbare Systemvariable (x) des realen Systems die Geschwindigkeit der Antriebsketten eines militärischen Panzers ist.

10. Verfahren zum Unterdrücken von frequenzvarianten Störungen (d) in einem System zum Unterdrücken von Systemvariantenstörungen für ein Rückkopplungssteuersystem (3; 4), wobei das System eine innere Rückkopplungsschleife im Rückkopplungssteuersystem (3; 4) ist, das ein reales System (G) umfasst, mit einem ersten Filtermittel ($B_1$(f'); $B_1$(f*)) verbunden ist, das mit einem Frequenzschätzmittel (3A; 4A) und einem Systemmodelliermittel (3B; 4B) verbunden ist, wobei das Systemmodelliermittel (3B; 4B) mit einem zweiten Filtermittel ($B_2$(f'); $B_2$(f*)) über ein Subtraktionsmittel (5) verbunden ist,
   **gekennzeichnet durch**
   das Umfassen der Schritte:

   - Schätzen der Hauptfrequenz (f'; f*) einer Störung (d);
   - Herausfiltern des Frequenzgehalts in einem ersten Rückkopplungssignal (y) und einem zweiten Rückkopplungssignal (v) um die geschätzte Hauptfrequenz (f'; f*) herum;
   - Modellieren und Kompensieren der Dämpfung und des Phasenverlustes des realen Systems (G) unter Verwendung der geschätzten Hauptfrequenz (f'; f*) und eines zweiten Eingangssignals (S);
   - Erzeugen eines dämpfungs- und phasen-kompensierten zweiten Ausgangssignals (S');
   - Erzeugen eines geschätzten Störungssignals (d') durch Subtrahieren eines ersten Ausgangssignals aus dem zweiten Filtermittel ($B_2$(f'); $B_2$(f*)) vom zweiten Ausgangssignal (S'); und
   - Addieren des geschätzten Störungssignals (d') zum ersten Eingangssignal (u) der inneren Rückkopplungsschleife.

11. Verfahren gemäß Anspruch 10, wobei der Schritt des Modellierens und Kompensierens der Dämpfungs und des Phasenverlusts des realen Systems (G) unter Verwendung der geschätzten Hauptfrequenz (f'; f*) und des gefilterten ersten Rückkopplungssignals (y) weiterhin die Schritte umfasst:

   - Addieren an 90°-Phasenverschiebung zu einem zweiten Eingangssignal (S) bei der geschätzten Hauptfrequenz (f'; f*) unter Verwendung eines dritten Filtermittels (A(f'); A(f*));
   - Entfernen der addierten Verstärkung des dritten Filtermittels (A(f'); A(f*)) durch Verwenden eines ersten Verstärkungsmultiplikators (KA);
   - Erzeugen dritter und vierter Ausgangssignale ($S_2$, $S_3$) aus einem ersten bzw. zweiten Signalgenerator ($SG_2$, $SG_3$);
   - Multiplizieren des dritten Ausgangssignals ($S_2$) des ersten Signalgenerators ($SG_2$) mit einem fünften Ausgangssignal ($S_1$) des ersten Verstärkungsmultiplikators (KA) und des vierten Ausgangssignals ($S_3$) des zweiten

Signalgenerators (SG$_3$) mit dem zweiten Eingangssignal (S) unter Verwendung eines ersten beziehungsweise zweiten Multiplikators (M$_1$ bzw. M$_2$);
- Summieren eines sechsten und siebten Ausgangssignals des ersten und zweiten Multiplikators (M$_1$ bzw. M$_2$) unter Verwendung eines Summierknotens;
- Entfernen der Verstärkung des realen Systems (G) unter Verwendung eines zweiten Verstärkungsmultiplikators (KG).

**12.** Verfahren gemäß Anspruch 11, wobei der Schritt des Erzeugens des dritten und vierten Ausgangssignals (S$_2$, S$_3$) aus einem ersten bzw. zweiten Signalgenerator (SG$_2$, SG$_3$) und der Schritt des Entfernens der addierten Verstärkung des realen Systems (G) unter Verwendung eines zweiten Verstärkungsmultiplikators (KG) in Abhängigkeit von einer Tabelle (T) durchgeführt wird, die die Phasenverschiebung und die addierte Verstärkung des realen Systems (G) bei verschiedenen Frequenzen umfasst.

**13.** Verfahren gemäß einem der Ansprüche 10 bis 12, wobei der Schritt des Schätzens der Hauptfrequenz (f'; f*) der Störung (d) weiter den Schritt umfasst

- Verwenden einer vorbestimmten kontinuierlichen Funktion (F(x)) einer messbaren Systemvariable (x) des realen Systems (G).

**14.** Verfahren gemäß einem der Ansprüche 10 bis 13, wobei der Schritt des Schätzens der Hauptfrequenz (f'; f*) der Störung (d) weiter die Schritte umfasst:

- Verwenden der diskreten Fourier-Transformation zur Berechnung des Frequenzspektrums des Rückkopplungssignals (y) auf einen vorbestimmten Intervall (I);
- Extrahieren der Frequenz, die den maximalen Energiespitzenwert im Frequenzspektrum aufweist; und
- Einstellen der extrahierten Frequenz als der geschätzten Hauptfrequenz (f'; f*) der Störung (d).

**15.** Verfahren gemäß Anspruch 14, wobei der Schritt des Schätzens der Hauptfrequenz (f'; f*) der Störung (d) weiterhin den Schritt umfasst:

- Verwenden der vorgegebenen kontinuierlichen Funktion (F(x)) der messbaren Systemvariante (x) des realen Systems (G), um das vorbestimmte Intervall (I) zu bestimmen.

**16.** Rückkopplungssteuersystem (3; 4), umfassend ein System zum Unterdrücken von Frequenzvariantenstörungen gemäß einem der Ansprüche 1 bis 9.

**17.** Rückkopplungssteuersystem (3;4) gemäß Anspruch 16, wobei das Rückkopplungssteuersystem (3; 4) ein Servosystem zum Steuern der Höhe und Richtung eines Kanonenrohrs auf einem Militärpanzer ist.

**Revendications**

**1.** Système pour supprimer des perturbations de variantes de fréquence pour un système de commande à rétroaction (3 ; 4), dans lequel ledit système est une boucle de rétroaction interne dans le système de commande à rétroaction (3 ; 4) comprenant un système réel (G) connecté à un premier moyen de filtrage (B$_1$(f') ; B$_1$(f*)), qui est connecté à un moyen d'estimation de fréquence (3A ; 4A) et un moyen de modélisation de système (3B ; 4B), dans lequel ledit moyen de modélisation de système (3B ; 4B) est connecté à un deuxième moyen de filtrage (B$_2$(f'); B$_2$(f*)) par l'intermédiaire d'un moyen de soustraction (5),
**caractérisé en ce que**

➢ ledit moyen d'estimation de fréquence (3A ; 4A) comprend des moyens pour estimer la fréquence principale (f' ; f*) d'une perturbation (d) ;
➢ ledit premier moyen de filtrage (B$_1$(f') ; B$_1$(f*)) est agencé pour retirer le contenu fréquentiel d'un premier signal de rétroaction (y) autour de ladite fréquence principale (f' ; f*) estimée :
➢ ledit deuxième moyen de filtrage (B$_2$(f') ; B$_2$(f*)) est agencé pour retirer le contenu fréquentiel d'un deuxième signal de rétroaction (v) autour de ladite fréquence principale (f' ; f*) estimée ;
➢ ledit moyen de modélisation de système (3B ; 4B) comprend des moyens agencés pour utiliser un deuxième signal d'entrée (S) provenant dudit premier moyen de filtrage (B$_1$(f') ; B$_1$(f*)) et ladite fréquence principale (f' ;

f*) estimée pour modéliser et compenser l'amortissement et la perte de phase dudit système réel (G) ; et

➢ ledit moyen de soustraction (5) est agencé pour soustraire un premier signal de sortie provenant dudit deuxième moyen de filtrage ($B_2(f')$; $B_2(f^*)$) d'un deuxième signal de sortie (S') provenant dudit moyen de modélisation de système (3B ; 4B) pour obtenir un signal de perturbation estimée (d') ajouté à un premier signal d'entrée (u) de ladite boucle de rétroaction interne.

2. Système selon la revendication 1, dans lequel lesdits premier et deuxième moyens de filtrage ($B_1(f')$ ; $B_1(f^*)$ ; $B_2(f')$ ; $B_2(f^*)$) sont des filtres passe-bande à bande étroite agencés pour être ajustés en fonction de ladite fréquence principale (f' ;f*) estimée.

3. Système selon l'une quelconque des revendications 1 à 2, dans lequel ledit moyen de modélisation de système (3B ; 4B) comprend :

➢ un troisième moyen de filtrage ($A(f')$ ; $A(f^*)$) agencé pour ajouter un déphasage de 90° à un deuxième signal d'entrée (S) à ladite fréquence principale (f' ; f*) estimée ;

➢ un premier multiplicateur de gain (KA) agencé pour retirer le gain ajouté dudit troisième moyen de filtrage ($A(f')$ ; $A(f^*)$) ;

➢ un premier et un deuxième générateur de signal ($SG_2$, $SG_3$) agencés pour générer, respectivement, un troisième et un quatrième signal de sortie ($S_2$, $S_3$) ;

➢ un premier et un deuxième multiplicateur ($M_1$, $M_2$) agencés pour multiplier ledit troisième signal de sortie ($S_2$) dudit premier générateur de signal ($SG_2$) par un cinquième signal de sortie ($S_1$) dudit premier multiplicateur de gain (KA) et ledit quatrième signal de sortie ($S_3$) dudit deuxième générateur de signal ($SG_3$) par ledit deuxième signal d'entrée (S), respectivement ;

➢ un noeud de sommation agencé pour additionner un sixième et un septième signal de sortie desdits premier et deuxième multiplicateurs ($M_1$, $M_2$) et un deuxième multiplicateur de gain (KG) agencé pour retirer le gain ajouté dudit système réel (G).

4. Système selon la revendication 3, dans lequel ledit troisième moyen de filtrage ($A(f')$ ; $A(f^*)$) est un filtre passe-bas variable en fréquence agencé pour être ajusté en fonction de ladite fréquence principale (f' ; f*) estimée.

5. Système selon la revendication 3 ou 4, dans lequel lesdits premier et deuxième générateurs de signaux ($SG_2$, $SG_3$) sont agencés pour générer lesdits troisième et quatrième signaux de sortie ($S_2$, $S_3$) en fonction d'une table (T) et ledit deuxième multiplicateur de gain (KG) est également agencé pour ajouter un gain en fonction de ladite table (T), dans lequel ladite table (T) comprend le déphasage et le gain ajouté du système réel (G) à différentes fréquences.

6. Système selon l'une quelconque des revendications 1 à 5, dans lequel ledit moyen d'estimation de fréquence (3A ; 4A) comprend des moyens de calcul agencés pour utiliser une fonction continue (F(x)) prédéterminée d'une variable de système (x) mesurable dudit système réel (G).

7. Système selon l'une quelconque des revendications 1 à 5, dans lequel ledit moyen d'estimation de fréquence (3A ; 4A) comprend:

➢ des moyens de calcul (DFT) agencés pour utiliser la transformée de Fourier discrète pour calculer le spectre de fréquence dudit signal de rétroaction (y) pendant un intervalle (I) prédéterminé, et

➢ des moyens d'extraction (max) agencés pour extraire la fréquence qui a la valeur crête d'énergie maximum dans ledit spectre de fréquence et définir ladite fréquence extraite en tant que fréquence principale (f' ; f*) estimée de ladite perturbation (d).

8. Système selon la revendication 7, dans lequel ledit intervalle (I) prédéterminé est déterminé en utilisant ladite fonction continue (F(x)) prédéterminée de ladite variable de système (x) mesurable dudit système réel (G).

9. Système selon l'une quelconque des revendications 6 ou 8, dans lequel ladite variable de système (x) mesurable dudit système réel (G) est la vitesse des chenilles d'entraînement d'un char d'assaut militaire.

10. Méthode pour supprimer des perturbations de variantes de fréquence (d) dans un système pour supprimer des perturbations de variantes de fréquence pour un système de commande à rétroaction (3 ; 4), dans laquelle ledit système est une boucle de rétroaction interne dans le système de commande à rétroaction (3 ; 4) comprenant un système réel (G) connecté à un premier moyen de filtrage ($B_1(f')$ ; $B_1(f^*)$), qui est connecté à un moyen d'estimation de fréquence (3A ; 4A) et un moyen de modélisation de système (3B ; 4B), dans laquelle ledit moyen de modélisation de système (3B ; 4B) est connecté à un deuxième moyen de filtrage ($B_2(f')$ ; $B_2(f^*)$) par l'intermédiaire d'un moyen de soustraction (5),

**caractérisé en ce**

**qu'**elle comprend les étapes consistant à :

➢ estimer la fréquence principale (f' ; f*) d'une perturbation (d) ;
➢ filtrer le contenu fréquentiel d'un premier signal de rétroaction (y) et d'un deuxième signal de rétroaction (v) autour de ladite fréquence principale (f' ; f*) estimée ;
➢ modéliser et compenser l'amortissement et la perte de phase dudit système réel (G) en utilisant ladite fréquence principale (f' ; f*) estimée et un deuxième signal d'entrée (S) ;
➢ produire un deuxième signal de sortie à amortissement et phase compensés (S') ;
➢ produire un signal de perturbation estimée (d') en soustrayant un premier signal de sortie provenant dudit deuxième moyen de filtrage ($B_2(f)$ ; $B_2(f^*)$) dudit deuxième signal de sortie (S') ; et
➢ ajouter ledit signal de perturbation estimée (d') à un premier signal d'entrée (u) de ladite boucle de rétroaction interne.

**11.** Méthode selon la revendication 10, dans laquelle l'étape de modélisation et de compensation de l'amortissement et de la perte de phase dudit système réel (G) en utilisant ladite fréquence principale (f' ; f*) estimée et le premier signal de rétroaction filtré (y) comprend en outre les étapes consistant à :

➢ ajouter un déphasage de 90° à un deuxième signal d'entrée (S) à ladite fréquence principale (f' ; f*) estimée en utilisant un troisième moyen de filtrage (A(f') ; A(f*)) ;
➢ retirer le gain ajouté dudit troisième moyen de filtrage (A(f') ; A(f*)) en utilisant un premier multiplicateur de gain (KA) ;
➢ générer des troisième et quatrième signaux de sortie ($S_2$, $S_3$) par un premier et un deuxième générateur de signal ($SG_2$, $SG_3$), respectivement ;
➢ multiplier ledit troisième signal de sortie ($S_2$) dudit premier générateur de signal ($SG_2$) par un cinquième signal de sortie ($S_1$) dudit premier multiplicateur de gain (KA) et ledit quatrième signal de sortie ($S_3$) dudit deuxième générateur de signal ($SG_3$) par ledit deuxième signal d'entrée (S) en utilisant un premier et un deuxième multiplicateur ($M_1$, $M_2$), respectivement ;
➢ additionner des sixième et septième signaux de sortie desdits premier et deuxième multiplicateurs ($M_1$ ; $M_2$), respectivement, en utilisant un noeud de sommation ;
➢ retirer le gain ajouté dudit système réel (G) en utilisant un deuxième multiplicateur de gain (KG).

**12.** Méthode selon la revendication 11, dans laquelle l'étape de génération desdits troisième et quatrième signaux de sortie ($S_2$, $S_3$) par un premier et un deuxième générateur de signal ($SG_2$, $SG_3$), respectivement, et l'étape de retrait du gain ajouté dudit système réel (G) en utilisant un deuxième multiplicateur de gain (KG) sont effectuées en fonction d'une table (T) comprenant le déphasage et le gain ajouté du système réel (G) à différentes fréquences.

**13.** Méthode selon l'une quelconque des revendications 10 à 12, dans laquelle l'étape d'estimation de la fréquence principale (f' ; f*) de ladite perturbation (d) comprend en outre l'étape consistant à :

➢ utiliser une fonction continue (F(x)) prédéterminée d'une variable de système (x) mesurable dudit système réel (G).

**14.** Méthode selon l'une quelconque des revendications 10 à 13, dans laquelle l'étape d'estimation de la fréquence principale (f' ; f*) de ladite perturbation (d) comprend en outre les étapes consistant à :

> utiliser la transformée de Fourier discrète pour calculer le spectre de fréquence dudit signal de rétroaction (y) dans un intervalle (I) prédéterminé ;
➢ extraire la fréquence qui a la valeur crête d'énergie maximum dans ledit spectre de fréquence ; et
➢ définir ladite fréquence extraite en tant que fréquence principale (f' ; f*) estimée de ladite perturbation (d).

**15.** Méthode selon la revendication 14, dans laquelle l'étape d'estimation de la fréquence principale (f' ; f*) de ladite perturbation (d) comprend en outre l'étape consistant à :

➢ utiliser ladite fonction continue (F(x)) prédéterminée de ladite variable de système (x) mesurable dudit système réel (G) pour déterminer ledit intervalle (I) prédéterminé.

16. Système de commande à rétroaction (3 ; 4) comprenant un système pour supprimer des perturbations de variantes de fréquence selon l'une quelconque des revendications 1 à 9.

17. Système de commande à rétroaction (3 ; 4) selon la revendication 16, dans lequel ledit système de commande à rétroaction (3 ; 4) est un système d'asservissement pour commander l'élévation et l'orientation d'un canon sur un char d'assaut militaire.

# Fig. 1

# Fig. 2 - Prior Art

EP 1 947 533 B1

# Fig. 3

EP 1 947 533 B1

# Fig. 4

EP 1 947 533 B1

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

## Non-patent literature cited in the description

- **Bodson M et al.** Rejection of disturbances with a large sinusoidal component of unknown frequency. *PROCEEDINGS OF THE SPIE,* 1996, vol. 2715, 64-75
- **Hillis A J et al.** A comparison of two adaptive algorithms for the control of active engine mounts. *JOURNAL OF SOUND AND VIBRATION,* 2005, vol. 286 (1-2), 37-54
- **Jieng-Jang Liu et al.** Frequency adaptive control technique for rejecting periodic run-out. *CONTROL ENGINEERING PRACTICE,* 2004, vol. 12 (1), 31-40
- Active vibration control in palletised workholding system for milling. **Rashid Amir et al.** NTERNATIONAL JOURNAL OF MACHINE TOOL DESIGN AND RESEARCH. PERGAMON PRESS, 2006, vol. 46, 1626-1636